# EUROPEAN PATENT APPLICATION

(11) **EP 4 293 753 A1**
(43) Date of publication of application: **20.12.2023**
(21) Application number: 22766161.8
(22) Date of filing: 24.02.2022
(51) Int. Cl.: H01M 4/525, H01M 10/0525, C08L 75/04

(54) **METHOD FOR PREPARING COATING-MODIFIED HIGH-NICKEL TERNARY POSITIVE ELECTRODE MATERIAL, AND PREPARED MATERIAL**

(30) Priority: 12.03.2021 CN 202110271669
(71) Applicant: Hefei Gotion High-Tech Power Energy Co., Ltd., Hefei, Anhui 230000 (CN)
(72) Inventor: GAO, Minghao, Hefei, Anhui 230000 (CN); LONG, Junjun, Hefei, Anhui 230000 (CN); ZHU, Wenting, Hefei, Anhui 230000 (CN)
(74) Representative: Finetti, Claudia
(86) International application number: PCT/CN2022/077706
(87) International publication number: WO 2022/188635

(57) **Abstract**

The present disclosure discloses a method for preparing a coating-modified high-nickel ternary cathode material, relating to the technical field of lithium-ion battery cathode material materials. The method includes the following steps: (1) preparation of lignin-amine-modified polymer emulsion: reacting a diisocyanate with a dihydric alcohol, and then adding lignin modified with an organic amine instead of an amine chain extender to prepare a modified polymer emulsion; and (2) adding a high-nickel ternary cathode material to the modified polymer emulsion obtained in step (1), and then carrying out spray drying for curing and film formation, thereby obtaining the coating-modified high-nickel ternary cathode material. The beneficial effects of the present disclosure lie in that spray drying is used in the present disclosure for curing and film formation, so a polymer coating layer is continuous and homogeneous, which provides the material with good mechanical properties. Thus, structural changes caused by a reduced cobalt content can be inhibited. In addition, a large amount of wastewater resulting from a wet coating process is reduced, and the manufacturing costs are reduced.

## Description

### Technical Field

The present disclosure relates to the technical field of lithium-ion battery positive electrode materials, and in particular to a method for preparing a coating-modified high-nickel ternary cathode material, and a prepared material.

### Background

Lithium-ion batteries (LIBs) have developed rapidly because of their special advantages and great attention to high energy storage systems in academia and industry. Especially, with the expansion of LIBs application, it has become an inevitable development trend to realize high volume energy density and power density. Due to the advantages of its high specific capacity, energy density and power density, etc, a ternary layered positive electrode material has become the research focus of lithium-ion battery positive electrode materials in recent years. With the increase of the nickel content in a nickel-based ternary cathode material, the specific capacity of the material will be greatly improved, but the decrease of the cobalt content will lead to the deterioration of the stability of the material. Moreover, due to the increase of the nickel content, massive lithium-nickel disordering will occur, which will lead to the decline of battery cycle life in case of a large rate. Furthermore, when a high-nickel positive electrode material is in a highly-delithiated state, there will be a serious interface reaction between high-valence manganese and the electrolyte, thus causing potential safety hazards. Therefore, on the premise of increasing the capacity of the material, improving the interface performance is one of important factors for determining whether the high-nickel positive electrode material can be widely applied commercially. To this end, researchers have provided various modification methods. At present, mainstream modification methods involve dry or wet coating of oxides (such as AlO₃, TiO, WO₃, etc.) and non-oxides (such as AlF₃, PVDF, Li₃PO₄, etc.).

Dry doping and coating modification mainly involves use of oxides, such as nano tungsten oxide, tantalum oxide, lanthanum oxide, etc. These oxides are higher in price. In addition, the process of preparing the modified material still involves sintering, rather than simple mixing and compounding. On the other hand, in the process of preparing a battery cell from the doped and coated positive electrode material, fresh interface exposure tends to occur due to high compaction, which affects the comprehensive performance.

A patent application with a publication number CN109390579A discloses a method for preparing a carbon-coated high-nickel ternary cathode material by dry and wet processes. The dry coating process cannot ensure a homogeneous coating or ensure that all coatings are converted into lithium-containing oxides, which affects the interface stability and the comprehensive performance of the battery. The conventional wet coating process may result in a large amount of wastewater, which virtually increases the manufacturing costs.

### SUMMARY

The technical problems to be solved by the present disclosure lies in that: the dry coating process in the prior art cannot ensure a homogeneous and continuous coating, which affects the interface stability and the comprehensive performance of the battery; and the conventional wet coating process may result in a large amount of wastewater, which virtually increases the manufacturing costs.

The present disclosure solves the above technical problems by the following technical means:
The present disclosure provides a method for preparing a coating-modified high-nickel ternary cathode material, including the following steps:
(1) preparation of a lignin-amine-modified polymer emulsion: modifying a lignin with an organic amine, and then adding a diisocyanate, a dihydric alcohol and a chain extender to carry out a reaction, thereby obtaining a modified polymer emulsion; and
(2) adding a high-nickel ternary cathode material to the modified polymer emulsion obtained in step (1), and then carrying out spray drying for film formation, thereby obtaining the coating-modified high-nickel ternary cathode material.

The beneficial effects: Spray drying is used in the present disclosure for curing and film formation, so a polymer coating layer is continuous and homogeneous, which provides the material with good mechanical properties. Thus, structural changes caused by a reduced cobalt content can be inhibited. In addition, a large amount of wastewater resulting from a wet coating process is reduced, and the manufacturing costs are reduced.

The polymer film provided by the present disclosure has excellent elasticity and ductility, and structural stability can be ensured when the material is squeezed, thereby improving the mechanical properties of the film formed by the polymer.

By modifying the polymer emulsion with the lignin-amine, the obtained polymer has excellent electrochemical stability, and thus can effectively prevent the positive electrode material from directly contacting the electrolyte when being coated on the surface of the positive electrode material, thereby reducing side reactions.

According to the present disclosure, the lignin-amine is innovatively used to modify the polymer matrix, and the spray drying process is used to prepare the coating-modified positive electrode material. The prepared high-nickel positive electrode material has significantly improved cycling stability, which provides a new direction for industrial production.

Common amine chain extenders in polymer synthesis are triethylamine, diethanolamine, diethylenetriamine, etc. However, these chain extenders are volatile and toxic. Lignin is one of the three main components in plant fiber raw materials, second only to cellulose in content, and has a three-dimensional network structure. There are active groups such as aromatic groups, phenolic hydroxyl groups, alcoholic hydroxyl groups, carbonyl groups, methoxy groups, carboxyl groups and conjugated double bonds in lignin molecules, which can carry out various chemical reactions, making the lignin a potential chemical raw material. However, the lignin has a low reactivity.

In the present disclosure, the modified lignin-amine is used instead of the amine chain extender. On the one hand, the harm to the human body and environment in the synthesis process can be reduced. On the other hand, the lignin has such characteristics that can give the polymer a more stable structure.

The lignin required in the preparation of the present disclosure is cheap, accessible and extensive, and the method provided by the present disclosure is simple and efficient and has wide application prospects in the field of lithium-ion batteries.

The polymer emulsion can form a film on its own, but with a very low speed; but with the spray drying, the film can be formed more efficiently and faster, and the type of the polymer can hardly affect the speed of film formation.

Preferably, a method for preparing the modified polymer emulsion includes the following steps:
S1: mixing the lignin, the organic amine and a deionized water in a certain ratio, adjusting a pH to 8 to 11 with an ammonia water, then adding a formaldehyde, and heating the mixture to 20 to 80°C to react for 1 to 6 h; after the reaction is completed, adding isopropanol to obtain a brown precipitate, and carrying out purification to obtain a modified lignin-amine;
S2: mixing the dihydric alcohol and the diisocyanate that have been dehydrated in a vacuum, and heating the mixture to 80 to 100°C and then reacting for 1 to 3 h to obtain a reaction mixture; cooling the reaction mixture, adding a catalyst and the chain extender in it, and heating the mixture to 60 to 100°C, and then reacting for 3 to 6 h; and cooling the reaction mixture, adding deionized water and the modified lignin-amine prepared in step S1, and carrying out emulsification to obtain the modified polymer emulsion.

Preferably, in step S1, a mass ratio of the lignin, the organic amine, the deionized water, the formaldehyde and the isopropanol is 1:(1 to 3):(5 to 15):(1 to 3):(20 to 40).

Preferably, in step S1, the mass ratio of the lignin, the organic amine, the deionized water, the formaldehyde and the isopropanol is 1:1.5:10:1.5:28.

Preferably, the organic amine is diethanolamine.

Preferably, the diisocyanate includes one or all of isophorone diisocyanate, hexamethylene diisocyanate, toluene diisocyanate, 4,4'-diphenylmethane diisocyanate and 4,4'-dicyclohexylmethane diisocyanate.

Preferably, the diisocyanate is isophorone diisocyanate.

Preferably, the dihydric alcohol includes one or all of polyoxypropylene glycol, trimethylolpropane-polyethylene glycol monomethyl ether, polycarbonate diol and poly(neopentyl glycol adipate). A number average molecular weight of the macromolecular dihydric alcohol is 1000 to 3000.

Preferably, the dihydric alcohol is trimethylolpropane-polyethylene glycol monomethyl ether.

Beneficial effects: When the dihydric alcohol is trimethylolpropane-polyethylene glycol monomethyl ether, the synthesized polymer is a nonionic polymer. The dihydric alcohol has a comb structure, which can provide a stable network structure for the polymer as compared with a single segment. The synthesized nonionic polymer has good solvent resistance and ion resistance.

Preferably, the catalyst includes one or all of stannous octoate, di(dodecylthio)dibutyltin and dibutyltin diacetate. The chain extender includes one or all of 1,4-butanediol, diethylene glycol, dimethylolpropionic acid and neopentyl glycol.

Preferably, the catalyst is stannous octoate, and the chain extender is diethylene glycol.

Preferably, a mass ratio of the catalyst to the modified lignin-amine to the catalyst, the modified lignin-amine, the chain extender, the diisocyanate, the dihydric alcohol and the deionized water is 1:(2 to 4):(15 to 35):(30 to 60):(200 to 500):(1500 to 2000).

Preferably, the mass ratio of the catalyst to the modified lignin-amine to the catalyst, the modified lignin-amine, the chain extender, the diisocyanate, the dihydric alcohol and the deionized water is 1:2.54:24.48:51.64:447.76:1716.46.

Preferably, a molecular formula of the high-nickel ternary cathode material is LiNi_{1-x-y}CoₓM_{y}O₂, where O<x≤0.2, 0<y≤0.2, and M is one or all of Al, Mn or Mg.

Preferably, a mass ratio of the high-nickel ternary cathode material to the modified polymer emulsion is (1 to 20):1.

The present disclosure further provides a coating-modified high-nickel ternary cathode material prepared by the preparation method described above.

The advantages of the present disclosure lie in that spray drying is used in the present disclosure for curing and film formation, so the polymer coating layer is continuous and homogeneous, which provides the material with good mechanical properties. Thus, structural changes caused by a reduced cobalt content can be inhibited. In addition, a large amount of wastewater resulting from a wet coating process is reduced, and the manufacturing costs are reduced.

By modifying the polymer emulsion with the lignin-amine, the obtained polymer has excellent electrochemical stability, and thus can effectively prevent the positive electrode material from directly contacting the electrolyte when being coated on the surface of the positive electrode material, thereby reducing side reactions.

According to the present disclosure, the lignin-amine is innovatively used to modify the polymer matrix, and the spray drying process is used to prepare the coating-modified positive electrode material. As can be seen from test results of the present disclosure, the high-nickel positive electrode material prepared by the method has significantly improved cycling stability, which provides a new direction for industrial production.

### Brief Description of the Drawings

Fig. 1 shows a performance test results of coating-modified high-nickel ternary cathode materials in examples and comparative examples of the present disclosure;
Fig. 2 shows a curve of LSV testing according to Example 3 of the present disclosure;
Fig. 3 shows curves of cycle testing according to Example 3 and Example 4 at a rate of 1 C of the present disclosure; and
Fig. 4 shows a curve of mechanical properties testing according to Example 3 of the present disclosure.

### Detailed Description of the Embodiments

In order to clearly describe objectives, the technical solutions and advantages of the present disclosure, a clear and complete description of the technical solutions in the present disclosure will be given below, in conjunction with the accompanying drawings in the examples of the present disclosure. Apparently, the examples described below are a part, but not all, of the examples of the present disclosure. All other examples obtained by those of ordinary skill in the art based on the examples in the present disclosure without creative work are within the protection scope of the present disclosure.

The test materials, reagents and the like used in the following examples are commercially available unless otherwise specified.

If the specific techniques or conditions are not indicated in the examples, the techniques or conditions described in the literature in the art or the product specification shall be followed.

### Example 1

A method for preparing a coating-modified high-nickel ternary cathode material specifically included the following steps:

### 1. Preparation of modified polymer emulsion

### S1: Preparation of modified lignin-amine:

A lignin, a diethanolamine and a deionized water were weighed according to a mass ratio of 1:1.5:10 and mixed uniformly. A pH was adjusted to 9 with an ammonia water. A formaldehyde was added to the resulting solution, and the mixture was heated to 60°C to react for 4 h. Isopropanol was added to obtain a brown precipitate. After vacuum filtration, the solid was washed with isopropanol 4 times and vacuum-dried at 60°C for 2 h to obtain the modified lignin-amine, named L-DEA. During the reaction, a mass ratio of the lignin to the formaldehyde to the isopropanol was 1:1.5:28.

### S2: Preparation of modified polymer emulsion:

Trimethylolpropane-polyethylene glycol monomethyl ether and isophorone diisocyanate that had been dehydrated in a vacuum were added to a four-neck flask equipped with a polytetrafluoroethylene stirring rod, a spherical condenser tube and a thermometer, stirred uniformly, and slowly heated to 92°C to react at a constant temperature for 2 h. The resulting mixture was cooled with ice water to 40°C, stannous octoate and diethylene glycol were added, and the mixture was heated to 82°C to react for 4 h. Finally, deionized water was added, the mixture was emulsified under the action of high shear force, and stoichiometric L-DEA was added to obtain the modified polymer emulsion. During the reaction, a mass ratio of the stannous octoate, the L-DEA to the diethylene glycol, the diphenylmethane diisocyanate to the trimethylolpropane-polyethylene glycol monomethyl ether, the deionized water was 1:2.54:24.48:51.64:447.76:1716.46.

### 2. Preparation of coating-modified high-nickel positive electrode material:

A high-nickel ternary cathode material LiNi_{0.85}Co_{0.10}Mn_{0.05}O₂ was added to the modified polymer emulsion. A mass ratio of the positive electrode material to the emulsion was 3:1. Spray drying was carried out for curing and film formation, thereby obtaining the coating-modified high-nickel ternary cathode material.

Lithium hexafluorophosphate was added to the polymer emulsion prepared in S2 of step 1. After film formation, a steel sheet, an adhesive film and a lithium sheet were assembled. Linear sweep voltammetry (LSV) testing was carried out under a decomposition voltage of 4.74 V.

The polymer-coated LiNi_{0.80}Co_{0.10}Mn_{0.10}O₂ material obtained above, a conductive agent (SP) and a binder (PVDF) in a mass ratio of 95:3:2 were used to produce an electrode N-methylpyrrolidone (NMP) as a solvent. The solution was applied to a carbon-coated aluminum foil, dried at 100°C for 5 h and compacted on a roller press. The lithium sheet serving as a negative electrode, a 1 M LiPF₆ solution serving as an electrolyte and Cellgard 2300 serving as a separator were assembled with the above positive electrode to form a button battery. Under a cut-off voltage of 2.75 to 4.3 V, the button battery was charged and discharged at a rate of 1 C. The specific capacity was 192.2mAh•g⁻¹, and the Cycle-50 capacity retention was 97.8%.

### Example 2

A method for preparing a coating-modified high-nickel ternary cathode material specifically included the following steps:

### 1. Preparation of modified polymer emulsion: the same as in Example 1.

### 2. Preparation of coating-modified high-nickel positive electrode material:

A high-nickel ternary cathode material LiNi_{0.85}Co_{0.10}Mn_{0.05}O₂ was added to the modified polymer emulsion. A mass ratio of the positive electrode material to the emulsion was 5:1. Spray drying was carried out for curing and film formation, thereby obtaining the coating-modified high-nickel ternary cathode material.

The assembly, testing and LSV testing of the button battery were the same as in Example 1.

The button battery was assembled by using the above positive electrode. Under a cut-off voltage of 2.75 to 4.3 V, the button battery was charged and discharged at a rate of 1 C. The specific capacity was 193.8mAh•g⁻¹, and the Cycle-50 capacity retention was 98.8%. Lithium hexafluorophosphate was added to the prepared polymer emulsion. After film formation, a steel sheet, an adhesive film and a lithium sheet were assembled. LSV testing was carried out under a decomposition voltage of 4.80 V.

### Example 3

A method for preparing a coating-modified high-nickel ternary cathode material specifically included the following steps:

### 1. Preparation of modified polymer emulsion: the same as in Example 1.

### 2. Preparation of coating-modified high-nickel positive electrode material:

A high-nickel ternary cathode material LiNi_{0.85}Co_{0.10}Mn_{0.05}O₂ was added to the modified polymer emulsion. A mass ratio of the positive electrode material to the emulsion was 8:1. Spray drying was carried out for curing and film formation, thereby obtaining the coating-modified high-nickel ternary cathode material.

The assembly, testing and LSV testing of the button battery were the same as in Example 1.

The button battery was assembled by using the above positive electrode. Under a cut-off voltage of 2.75 to 4.3 V, the button battery was charged and discharged at a rate of 1 C. The specific capacity was 195.9mAh•g⁻¹, and the Cycle-50 capacity retention was 99.3%. Lithium hexafluorophosphate was added to the prepared polymer emulsion. After film formation, a steel sheet, an adhesive film and a lithium sheet were assembled. LSV testing was carried out under a decomposition voltage of 4.96 V.

### Example 4

A method for preparing a coating-modified high-nickel ternary cathode material specifically included the following steps:

### 1. Preparation of modified polymer emulsion: the same as in Example 1.

### 2. Preparation of coating-modified high-nickel positive electrode material:

A high-nickel ternary cathode material LiNi_{0.85}Co_{0.10}Mn_{0.05}O₂ was added to the modified polymer emulsion. A mass ratio of the positive electrode material to the emulsion was 10:1. Spray drying was carried out for curing and film formation, thereby obtaining the coating-modified high-nickel ternary cathode material.

The assembly, testing and LSV testing of the button battery were the same as in Example 1.

The button battery was assembled by using the above positive electrode. Under a cut-off voltage of 2.75 to 4.3 V, the button battery was charged and discharged at a rate of 1 C. The specific capacity was 192.4mAh•g⁻¹, and the Cycle-50 capacity retention was 98.1%. Lithium hexafluorophosphate was added to the prepared polymer emulsion. After film formation, a steel sheet, an adhesive film and a lithium sheet were assembled. LSV testing was carried out under a decomposition voltage of 4.87 V.

### Comparative Example 1

This comparative example was different from Example 3 in that the dihydric alcohol was polycarbonate diol.

The button battery was assembled by using the above positive electrode. Under a cut-off voltage of 2.75 to 4.3 V, the button battery was charged and discharged at a rate of 1 C. The specific capacity was 189.7mAh•g⁻¹, and the Cycle-50 capacity retention was 96.3%. Lithium hexafluorophosphate was added to the prepared polymer emulsion. After film formation, a steel sheet, an adhesive film and a lithium sheet were assembled. LSV testing was carried out under a decomposition voltage of 4.63 V.

### Comparative Example 2

This comparative example was different from Example 3 in that the dihydric alcohol was poly(neopentyl glycol adipate).

The button battery was assembled by using the above positive electrode. Under a cut-off voltage of 2.75 to 4.3 V, the button battery was charged and discharged at a rate of 1 C. The specific capacity was 184.1mAh•g⁻¹, and the Cycle-50 capacity retention was 95.7%. Lithium hexafluorophosphate was added to the prepared polymer emulsion. After film formation, a steel sheet, an adhesive film and a lithium sheet were assembled. LSV testing was carried out under a decomposition voltage of 4.60 V.

### Comparative Example 3

This comparative example was different from Example 3 in that triethylamine was used as the amine chain extender instead of the lignin-amine.

The button battery was assembled by using the above positive electrode. Under a cut-off voltage of 2.75 to 4.3 V, the button battery was charged and discharged at a rate of 1 C. The specific capacity was 185.2mAh•g⁻¹, and the Cycle-50 capacity retention was 93.3%. Lithium hexafluorophosphate was added to the prepared polymer emulsion. After film formation, a steel sheet, an adhesive film and a lithium sheet were assembled. LSV testing was carried out under a decomposition voltage of 4.52 V.

### Comparative Example 4

This comparative example was a blank comparative example, i.e., the unmodified LiNi_{0.85}Co_{0.10}Mn_{0.05}O₂ high-nickel ternary cathode material was used.

The button battery was assembled by using the above positive electrode. Under a cut-off voltage of 2.75 to 4.3 V, the button battery was charged and discharged at a rate of 1 C. The specific capacity was 182.1mAh•g⁻¹, and the Cycle-50 capacity retention was 90.9%.

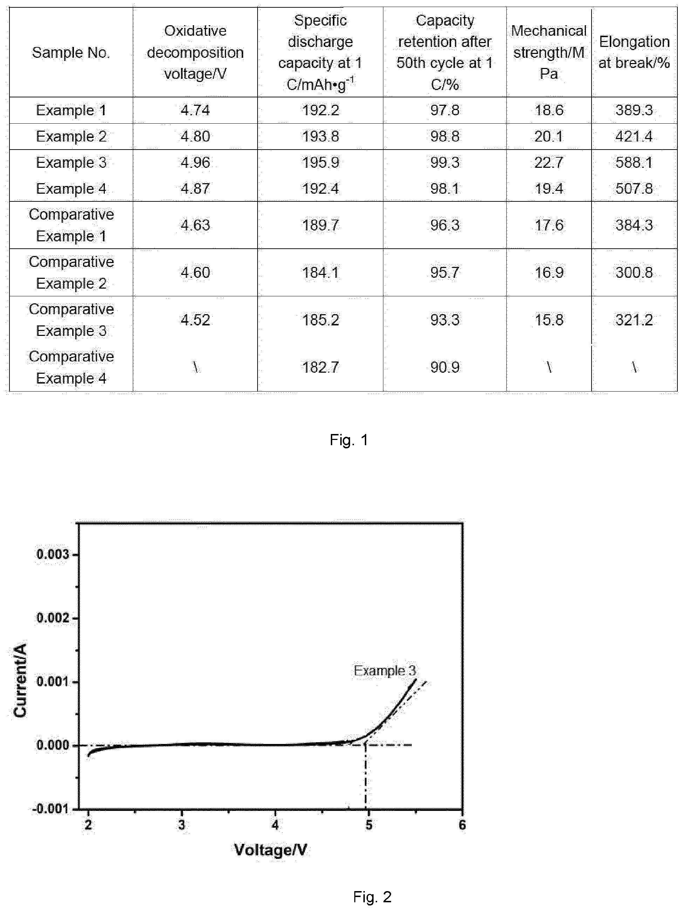

Results of performance testing of the coating-modified high-nickel positive electrode materials in Examples 1 to 4 and Comparative Examples 1 to 4 are shown in Fig. 1.

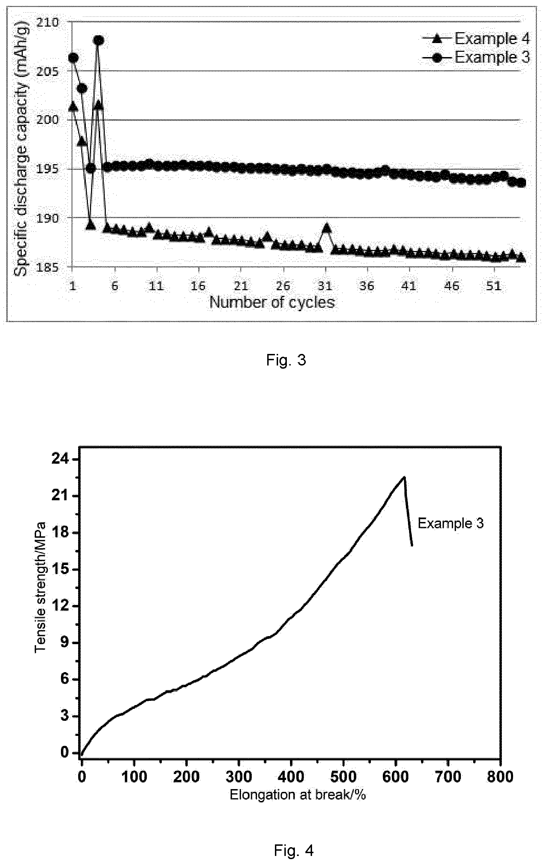

Fig. 2 shows a curve of LSV testing according to Example 3 of the present disclosure. Fig. 3 shows curves of cycle testing of Example 3 and Example 4 at a rate of 1 C of the present disclosure. As can be seen, the oxidative decomposition voltages of Examples 1 to 4 of the present disclosure were significantly improved as compared with the comparative examples. From the results of the cyclic charging and discharging testing, the discharge capacities and capacity retentions after the 50th cycle in Examples 1 to 4 were greatly improved.

Compared with Comparative Example 1 to Comparative Example 4, the ternary cathode material prepared by the method of the present disclosure has higher capacity retention, and excellent mechanical strength and elongation at break.

The above examples are intended only to illustrate, but not to limit the technical solutions of the present disclosure. Although the present disclosure has been described in detail with reference to the foregoing examples, those of ordinary skill in the art should understand that they can still modify the technical solutions described in the foregoing examples, or equivalently substitute some of the technical features. These modifications and substitutions do not make the essence of the corresponding technical solutions deviate from the spirit and scope of the technical solutions of the examples of the present disclosure.

## Claims

1. A method for preparing a coating-modified high-nickel ternary cathode material, comprising the following steps:
(1) preparation of a lignin-amine-modified polymer emulsion: modifying a lignin with an organic amine, and then adding a diisocyanate, a dihydric alcohol and a chain extender to carry out a reaction, thereby obtaining a modified polymer emulsion; and
(2) adding a high-nickel ternary cathode material to the modified polymer emulsion obtained in step (1), and then carrying out spray drying for film formation, thereby obtaining the coating-modified high-nickel ternary cathode material.

2. The method for preparing a coating-modified high-nickel ternary cathode material according to claim 1, wherein a method for preparing the modified polymer emulsion comprises the following steps:
S1: mixing the lignin, the organic amine and a deionized water in a certain ratio, adjusting a pH to 8 to 11 with an ammonia water, then adding a formaldehyde ..., and heating to 20 to 80°C to react for 1 to 6 h; after the reaction is completed, adding isopropanol to obtain a brown precipitate, and carrying out purification to obtain a modified lignin-amine;
S2: mixing the dihydric alcohol and the diisocyanate that have been dehydrated in a vacuum, and heating to 80 to 100°C and then reacting for 1 to 3 h to obtain a reaction mixture; cooling the reaction mixture, adding a catalyst and the chain extender in it, heating to 60 to 100°C, and then reacting for 3 to 6 h; and cooling, adding deionized water and the modified lignin-amine prepared in step S1, and carrying out emulsification to obtain the modified polymer emulsion.

3. The method for preparing a coating-modified high-nickel ternary cathode material according to claim 2, wherein in step S1, a mass ratio of the lignin, the organic amine, the deionized water, the formaldehyde and the isopropanol is 1:(1 to 3):(5 to 15):(1 to 3):(20 to 40).

4. The method for preparing a coating-modified high-nickel ternary cathode material according to any of claims 1 to 3, wherein the organic amine comprises one or all of ethylenediamine, diethanolamine, diethylenetriamine and triethylamine.

5. The method for preparing a coating-modified high-nickel ternary cathode material according to any of claims 1 to 3, wherein the diisocyanate comprises one or all of isophorone diisocyanate, hexamethylene diisocyanate, toluene diisocyanate, 4,4'-diphenylmethane diisocyanate and 4,4'-dicyclohexylmethane diisocyanate; and
the dihydric alcohol comprises one or all of polyoxypropylene glycol, polytetramethylene ether glycol, trimethylolpropane-polyethylene glycol monomethyl ether, polycarbonate diol and poly(neopentyl glycol adipate), a number average molecular weight of the macromolecular dihydric alcohol being 1000 to 3000.

6. The method for preparing a coating-modified high-nickel ternary cathode material according to claim 2, wherein the catalyst comprises one or all of stannous octoate, di(dodecylthio)dibutyltin and dibutyltin diacetate; and
the chain extender comprises one or all of 1,4-butanediol, diethylene glycol, dimethylolpropionic acid and neopentyl glycol.

7. The method for preparing a coating-modified high-nickel ternary cathode material according to claim 2, wherein a mass ratio of the catalyst, the modified lignin-amine, the chain extender, the diisocyanate, the dihydric alcohol and the deionized water is 1:(2 to 4):(15 to 35):(30 to 60):(200 to 500):(1500 to 2000).

8. The method for preparing a coating-modified high-nickel ternary cathode material according to claim 1, wherein a molecular formula of the high-nickel ternary cathode material is LiNi_{1-x-y}CoₓM_{y}O₂, wherein O<x≤0.2, 0<y≤0.2, and M is one or all of Al, Mn or Mg.

9. The method for preparing a coating-modified high-nickel ternary cathode material according to claim 1, wherein a mass ratio of the high-nickel ternary cathode material to the modified polymer emulsion is (1 to 20):1.

10. A modified high-nickel ternary cathode material prepared by the method according to any of claims 1 to 9.
